# EUROPEAN PATENT APPLICATION

(11) **EP 1 947 574 A1**
(43) Date of publication of application: **23.07.2008**
(21) Application number: 08100440.0
(22) Date of filing: 14.01.2008
(51) Int. Cl.: G06F 17/28

(54) **Foreign language translator in a document editor**

(30) Priority: 17.01.2007 US 654247
(71) Applicant: Novell, Inc., Provo, UT 84606-6169 (US)
(72) Inventor: Thomas, Kasman E., Wilton, CT 06897 (US)
(74) Representative: Hanna, Peter William Derek

(57) **Abstract**

Apparatus and methods allow users of document editors (30) to real-time translate language of text from a first to a second language. During use, users indicate a selection (44) for translation in a typing area of the document editor. The document editor seeks translation from a remote language translation service (20,20'), especially by way of internet http requests (46). Processing of returned translations (50) also occurs to present users with a useable form of the translation (52). Other aspects include seeking translations from multiple language translation services and selecting a best translation for display, according to predetermined criteria. Users can also select preferred languages for translation. Retrofitting existing document editors contemplates inserting executable code (92), in the form of plug-ins or macros, and executing them to obtain translations. Executable code is available as a computer program product in the form of a download or on a computer-readable medium.

## Description

### FIELD OF THE INVENTION

Generally, the present invention relates to computing environments having document editor software for creating and editing documents. Particularly, it relates to real-time translating text of open documents from first to second languages, or more. Various features include seeking language translation from sources remote to the document editor, such as by way of the internet, without the user needing to interface with a browser or other application external to the document editor. Still other features include the seeking of multiple language translations and selecting a best translation according to predetermined criteria. Establishing executable code in the document editor as a macro to-be-run is another noteworthy aspect.

### BACKGROUND OF THE INVENTION

"Document editors," such as Microsoft's Word program, Corel's WordPerfect program and Sun Microsystem's OpenOffice.org Writer program, to name a few, have been known for some time for the creation, editing and viewing of documents. Also known as word processing software, the document editors are robust products with numerous text functions, such as spelling and grammar checkers, dictionary and thesaurus resources, and foreign language dictionaries, but none of the products have language translation features. For this, users are left to their own devices.

Namely, human users translate words or texts of documents on their own with or without the assistance of other services. To the extent they use services, it is not uncommon to seek language-translation assistance from a stand-alone, handheld language translator, from a dedicated piece of language-translating software on a computing device, or by way of searching the internet. For the latter, many language translation services abound on the world wide web (wbb) and typical usage consists of cutting/pasting or typing to-be-translated words or text into a page of an open browser to get the translation from the remote databases of the translation service. Upon its translation (regardless of source), users then take the text back to the document editor and continue word processing functions as normal.

A problem with all these approaches, however, lies in the cumbersomeness of needing to consult a physical device, software application or internet web site external to the word processing software in which the text (in need of translation) resides. Stated differently, users experience inconvenience in time and effort (and sometimes money for the purchase of services) for want of a document editor having language translation services that can translate text of an open document without having to perform additional roles, like seeking language translations from the internet.

Still another problem with the prior art relates to a user's incognizance of how well a translation service actually performed. For example, many users take translations at face value without awareness of the properness of the translation, especially in relation to other words or text in the document. Accordingly, there is need in the art of document editors for language translation services. There is further need to make the services invisible or silently-operated relative to the user of the document editor to minimize inconvenience. It is also important to translate quickly and provide appropriate translations in the context of an open document of the editor. In that many users already own and/or use a document editor, it is further desirable to convert existing document editor software to the type having language translation services. Naturally, any improvements along such lines should further contemplate good engineering practices, such as relative inexpensiveness, stability, ease of implementation, low complexity, flexibility, etc.

### SUMMARY OF THE INVENTION

The present invention provides systems, methods and programs for implementing a foreign language translator in a document editor, in accordance with claims which follow. In a basic sense, users indicate text for translation directly in a document of the software and, silently or invisibly to the user, the text becomes translated. This adds robustness heretofore unavailable.

In one embodiment, a document editor is installed on a computing device. Upon configuration with appropriate executable instructions, the editor formulates requests to seek translation from a language translation service remote from the computing device upon an indication of a selection of text for translation by the user. Representatively, the document editor fashions one or more http requests to query the language translation service by way of the internet. Upon a translation received from the translation service, the document editor distills sundry code to provide a clean or useable translation form to the user. In this manner, users receive real-time translations to their text, but without any inconvenience, such as by way of opening browser applications, visiting web sites, consulting stand-alone products or software. It also appears to the user that the functionality of language translation was built directly into the document editor.

In another embodiment, the document editor solicits translations from many language translation services, and returns only a best translation to the user, based on predetermined criteria. In this manner, users get an appropriate translation, especially in the context of other text in the document. Naturally, users can also choose among different foreign languages, and translate a selection into or out of various languages, going straight from one to the other without going back to the original user-entered text.

In still another embodiment, configuring existing document editors simply requires the insertion of executable code to seek translation services as an executable macro of the document editor. This, of course, translates into ease of implementation. In an OpenOffice.org Writer version of the invention, for example, a prototype macro (written as a JavaScript macro, but could be in any language format) is easily inserted by menu commands and run from open documents. In other document editors, the code can be in macro format or compiled as a plug-in if the target application has a plug-in API capabilities, for example.

Regardless of form, the present invention allows users of document editors to real-time translate language of text in an open document from a first to a second language, or more, and back again, if desired. Simply, the document editor is configured with executable code seeking translation services from locations remote of the document editor, especially by way of http calls to the internet. During use, users simply indicate a selection for translation by highlighting text in a typing area of the document editor and the editor, returns real-time translations.

Still other embodiments contemplate computer program products available on computer-readable media or as downloads. Programming languages other than JavaScript are contemplated and include, but are not limited to, C, C++, C#, Python, BeanShell, or other.

These and other embodiments of the present invention will be set forth in the description which follows, and in part will become apparent to those of ordinary skill in the art by reference to the following description of the invention and referenced drawings or by practice of the invention. The claims, however, indicate the particularities of the invention.

### BRIEF DESCRIPTION OF THE DRAWINGS

The accompanying drawings incorporated in and forming a part of the specification, illustrate several aspects of the present invention, and together with the description serve to explain the principles of the invention. In the drawings:
Figure 1 is a diagrammatic view in accordance with the present invention of a representative computing environment for a foreign language translator in a document editor;
Figure 2 is a flow chart in accordance with the present invention for translating language in a document editor;
Figures 3A-3F are screens shots from a computing monitor in accordance with the present invention of a prototype foreign language translator in a document editor;
Figures 4A-4D are screen shots from a computing monitor in accordance with the present invention for using the prototype foreign language translator of Figures 3A-3F;
Figure 5 is a screen shot from a computing monitor in accordance with the present invention of an alternate embodiment for using the prototype foreign language translator in a document editor;
Figure 6 is a flow chart in accordance with the present invention of an alternate embodiment for translating language in a document editor; and
Figure 7 is a flow chart in accordance with the present invention of another alternate embodiment for translating language in a document editor, especially conversion of a formatted document from a first to a second language.

### DETAILED DESCRIPTION OF THE ILLUSTRATED EMBODIMENTS

In the following detailed description of the illustrated embodiments, reference is made to the accompanying drawings that form a part hereof, and in which is shown by way of illustration, specific embodiments in which the invention may be practiced. These embodiments are described in sufficient detail to enable those skilled in the art to practice the invention and like numerals represent like details in the various figures. Also, it is to be understood that other embodiments may be utilized and that process, mechanical, electrical, arrangement, software and/or other changes may be made without departing from the scope of the present invention. In accordance with the present invention, methods and apparatus for foreign language translation in a document editor are hereinafter described.

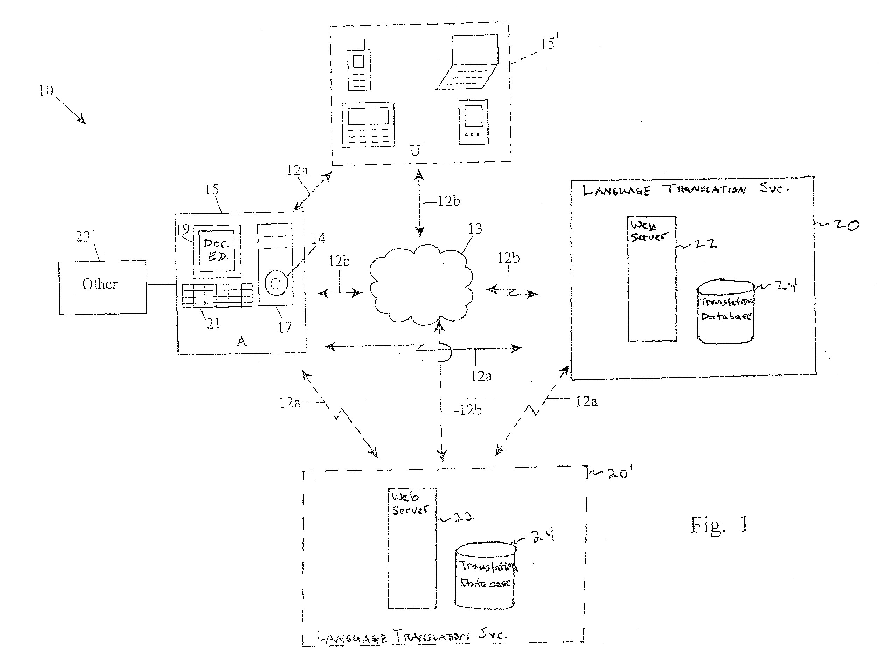

With reference to Figure 1, a representative environment 10 for language translation in a document editor (Doc. Ed.) consists of one or more computing devices 15 available per each document editor, especially as an installed application of executable code on a computing device remote from a language translation service 20. In a traditional sense, an exemplary computing device includes a general or special purpose computing device in the form of a conventional fixed or mobile computer 17 having an attendant monitor 19 and user interface 21. The computer internally includes a processing unit for a resident operating system, such as DOS, WINDOWS, MACINTOSH, VISTA, UNIX and LINUX, to name a few, a memory, and a bus that couples various internal and external units, e.g., other 23, to one another. Representative other items 23 include, but are not limited to, PDA's, cameras, scanners, printers, microphones, joy sticks, game pads, satellite dishes, hand-held devices, consumer electronics, minicomputers, computer clusters, main frame computers, a message queue, a peer machine, a broadcast antenna, a web server, an AJAX client, a grid-computing node, a peer, a virtual machine, a web service endpoint, a cellular phone or palm device, or the like. The other items may also be stand alone computing devices 15' in the environment 10 or the computing device itself, upon which the document editor is installed.

In either, storage devices are contemplated and may be remote or local. While the line is not well defined, local storage generally has a relatively quick access time and is used to store frequently accessed data, while remote storage has a much longer access time and is used to store data that is accessed less frequently. The capacity of remote storage is also typically an order of magnitude larger than the capacity of local storage. Regardless, storage is representatively provided for aspects of the invention contemplative of computer executable instructions, e.g., software, as part of computer program products on readable media, e.g., disk 14 for insertion in a drive of computer 17. Computer executable instructions may also be available as a download or reside in hardware, firmware or combinations in any or all of the depicted devices 15 or 15'.

When described in the context of computer program products, it is denoted that items thereof, such as modules, routines, programs, objects, components, data structures, etc., perform particular tasks or implement particular abstract data types within various structures of the computing system which cause a certain function or group of functions. In form, the computer product can be any available media, such as RAM, ROM, EEPROM, CD-ROM, DVD, or other optical disk storage devices, magnetic disk storage devices, floppy disks, or any other medium which can be used to store the items thereof and which can be assessed in the environment.

In network, the computing device of the document editor communicates with one or more other devices 20, 20' via wired, wireless or combined connections 12 that are either direct 12a or indirect 12b. If direct, they typify connections within physical or network proximity (e.g., intranet). If indirect, they typify connections such as those found with the internet, satellites, radio transmissions, or the like, and are given indistinctly as element 13. In this regard, other contemplated items include servers, routers, peer devices, modems, T1 lines, satellites, microwave relays or the like. The connections may also be local area networks (LAN) and/or wide area networks (WAN) that are presented by way of example and not limitation. The topology is also any of a variety, such as ring, star, bridged, cascaded, meshed, or other known or hereinafter invented arrangement.

In form, the other devices 20, 20' represent language translation services available to the document editor for seeking translations, upon user indication of selections of text. In one embodiment, the other devices consist of web servers 22 and attendant databases 24, containing logic for translating language. Altavista's Babel Fish, for instance, is representative of the other device, but may be any of a variety of language translators, such as those found at wordreference.com, translation.langenberg.com, or other. In other embodiments, more than one other device is contemplated, and optional features are shown in dashed lines in the figure. Regardless of form, however, it is where the document editor of the invention will seek translation of text, without inconveniencing the user of the editor.

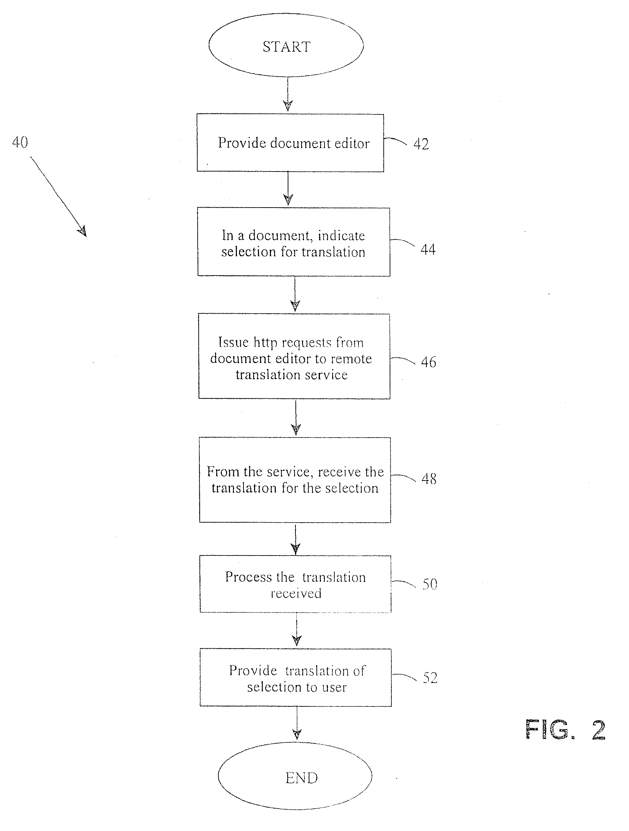

With reference to Figure 2, a high-level organization for language translation in a document editor is given generally as element 40. At step 42, a document editor is provided. In this regard, the document editor is of an existing type, such as Microsoft's Word program, Corel's WordPerfect program or Sun Microsystem's OpenOffice.org Writer program, to name a few, or is of a proprietary nature not yet known commercially. It is also installed on a computing device 15 or 15' (Figure 1) and users locally or remotely create, edit and view existing or new documents of the word processing variety through its functionality. The document editor is also configured originally with executable code to perform the hereafter-described language translation or is reconfigured after initial release, such as by way of retrofit.

In either, the users indicate a selection of text for translation, such as by highlighting text in an open document of the editor (step 44). Upon this occurring, the document editor issues http requests to the translation service, e.g., 20 (Figure 1), remote from the computing device upon which the document editor is installed (step 46).

Upon receipt of the request, the translation service translates the text so highlighted and returns it to the document editor, where it is received (step 48). In that translations often include code superfluous to the actual translation of text, the document editor processes the received translation (step 50) to clean it for ultimate presentation in a useable translation form to the user (step 52).

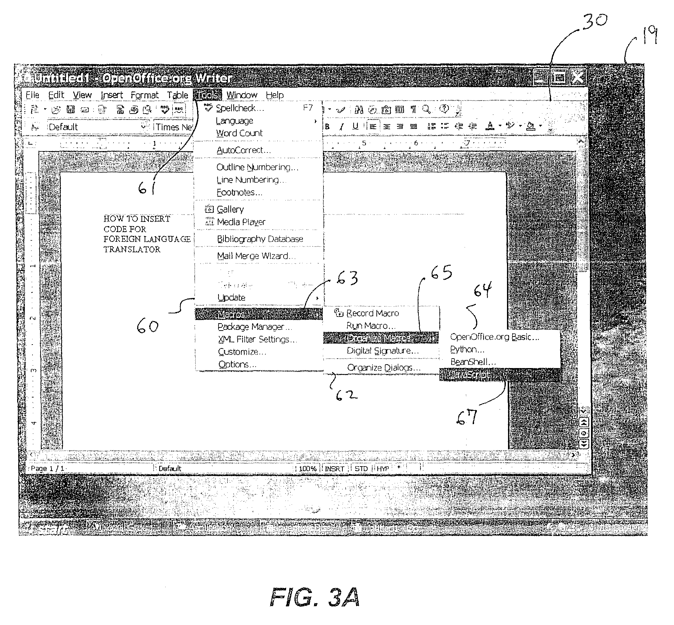

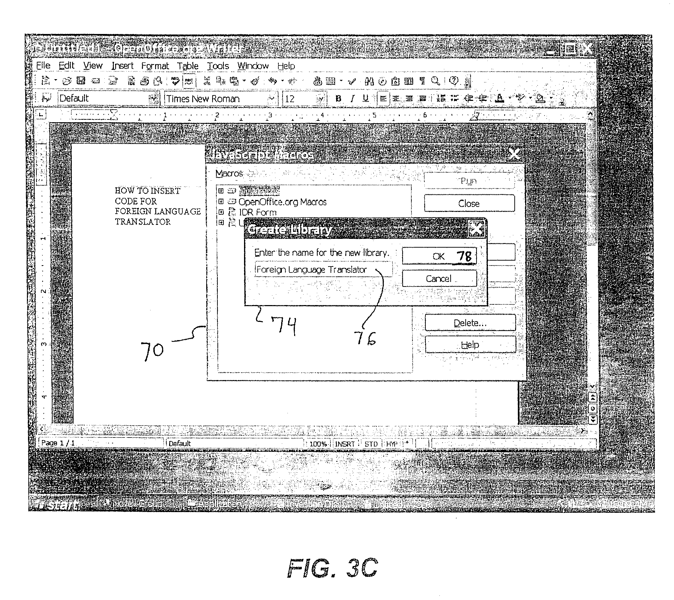

With reference to the sequential screen shots of a monitor 19 in Figures 3A-3F, a prototype installation of executable code into a document editor 30, of the OpenOffice.org Writer type, on a local computing device 15 (Figure 1) is described. As seen in Figure 3A, a user selects Tools>Macros>Organize Macros>JavaScript according to the drop down menus 60, 62 and 64 and highlighted bars 61, 63, 65 and 67.

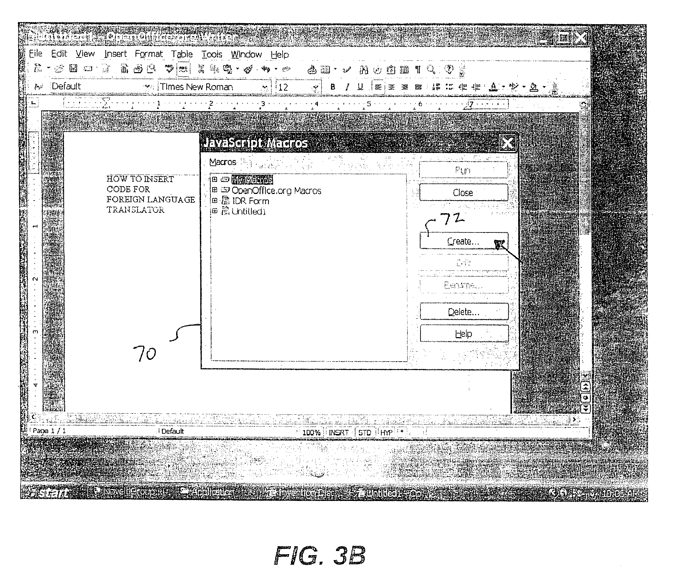

In Figure 3B, this causes opening of a "JavaScript Macros" window 70 that users use to select, such as by way of the shown pointing device, the option "Create" 72. Upon this occurring, a "Create Library" window 74 is opened that users utilize to insert an appropriate name, e.g., Foreign Language Translator, 76. They then select "OK" 78.

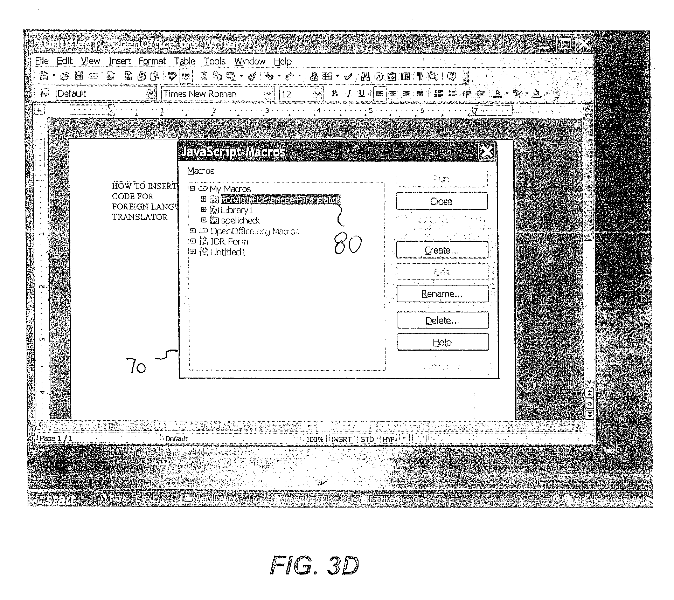

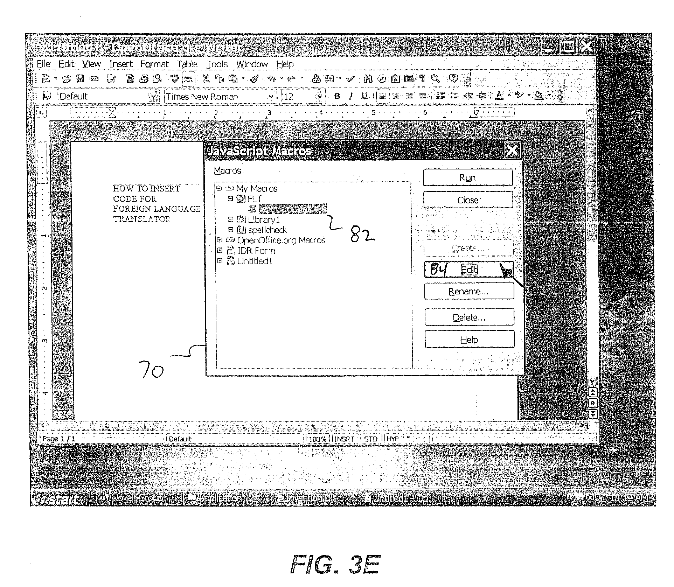

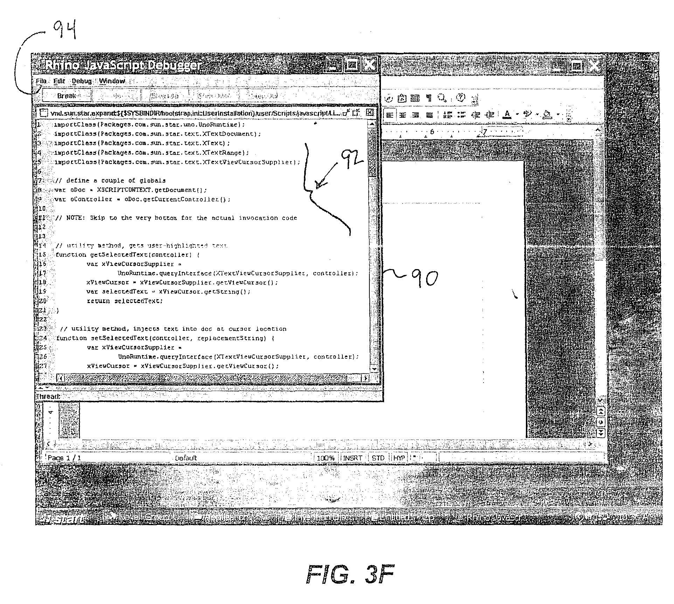

In Figure 3D, this then creates the appropriate library in the JavaScript Macros window 70, at position 80, for example. Users then select or highlight the library to create the actual JavaScript macro. In this example, the user named the macro "language xlator" 82 (Figure 3E), whereupon the "Edit" option 84 is selected to actually supply the necessary executable code, in this instance an executable macro, in the document editor. In Figure 3F, this occurs upon the opening of an editor window 90 ("Rhino JavaScript Debugger"), where the lines of executable code 92, for seeking translation from remote translation services (described in more detail below under the heading "Code Listing"), is inserted, either by pasting, typing or on-the-go programming, to name a few. The user then "saves" the macro, such as under the File heading 94, for instance, and the document editor is provisioned with foreign language translation capabilities of the type previously outlined.

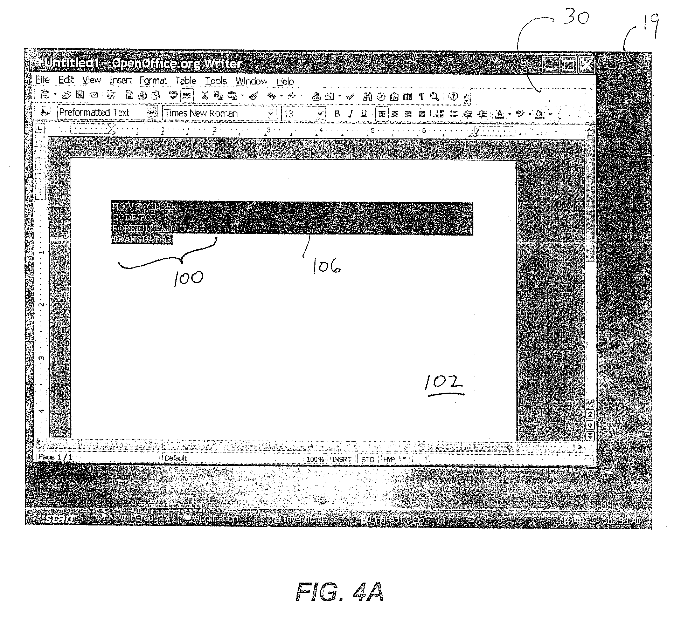

With reference to Figures 4A-4D, use of the document editor 30, so provisioned with the macro from Figures 3A-3F, is now described for the translation services of text. In Figure 4A, a user adds text 100, such as by typing, pasting, etc., into a typing area 102 of the document editor. The user then indicates the selection for translation, such as by highlighting it 106 by way of a pointing device, for example. As will be appreciated, however, it is seen that all the text in the typing area is highlighted. In other examples, users may want less-than-all the available text translated and are free to indicate translation of just a single word, a single sentence, a single paragraph, etc., of a much larger document. Naturally, the invention embraces all such scenarios.

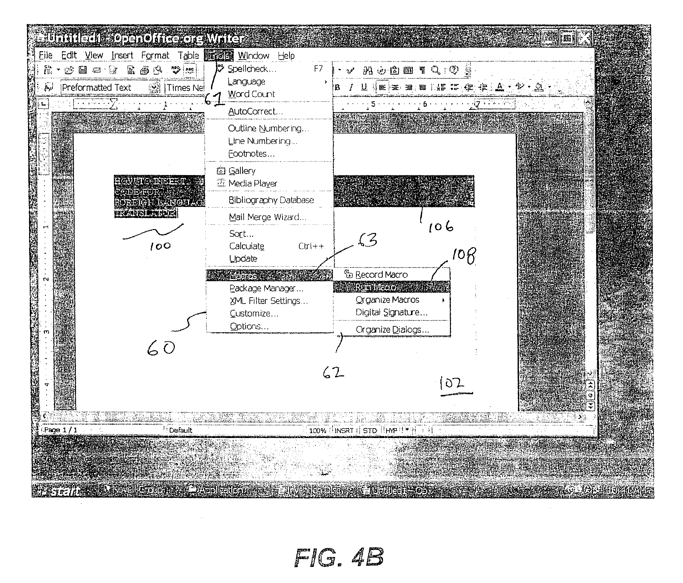

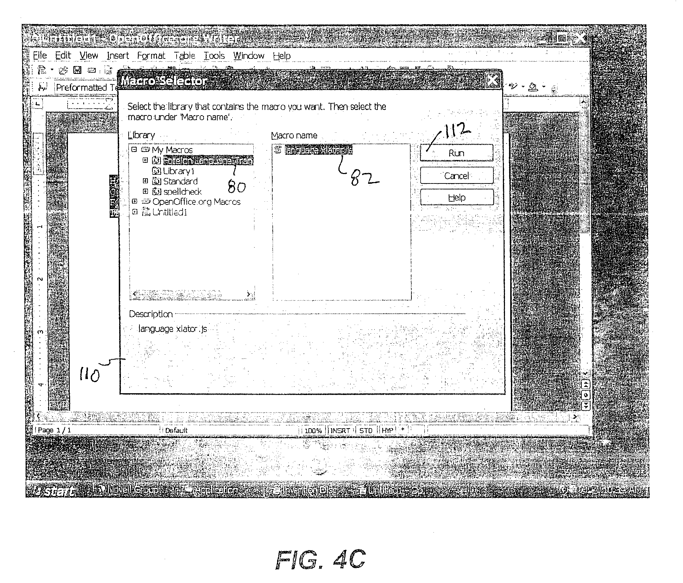

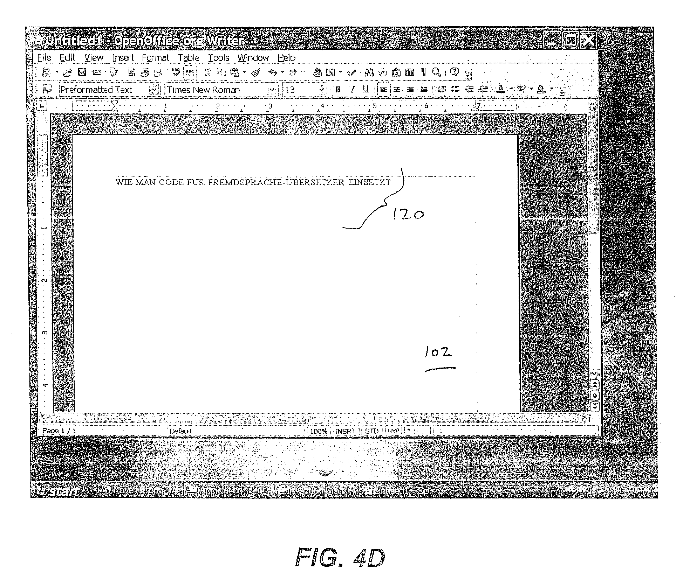

In Figure 4B, the user then runs the macro previously installed. In one embodiment, this consists of highlighting various menu commands, such as a "Run Macro" option 108 under the Tools drop down menu 60 and the "Macros" drop down menu 62. In Figure 4C, this then opens a "Macro Selector" window 110, whereby users select the previously-made "language xlator.js" 82, under the "Foreign Language Translator" 80, and select the "Run" option 112. Thereafter, and nearly instantaneously or "just-in-time," the document editor issues its http request of the remote translation services, receives a translation response, and processes the response for display to a user (Figure 2: steps 46, 48, 50, and 52). As seen in Figure 4D, the text (at its highlighted position) is then replaced with the translation result 120. In this instance, the English text "HOW TO INSERT CODE FOR FOREIGN LANGUAGE TRANSLATOR" was replaced with "WIE MAN CODE FÜR FREMDSPRACHE-ÜBERSETZER EINSETZT" in German, complete with German symbols "Ü" and being all in capital letters, corresponding to the format specified by the user of the source document. Naturally, translations can occur from any language to any other language and the functionality for this resides in the executable code of the macro earlier established. Translations can also occur again and again, with or without returning to the original English text. That is, a user could select the German text 120 in Figure 4D, and have it translated directly to still another language upon the running of another macro, for example, without retyping the original English text of Figure 4A.

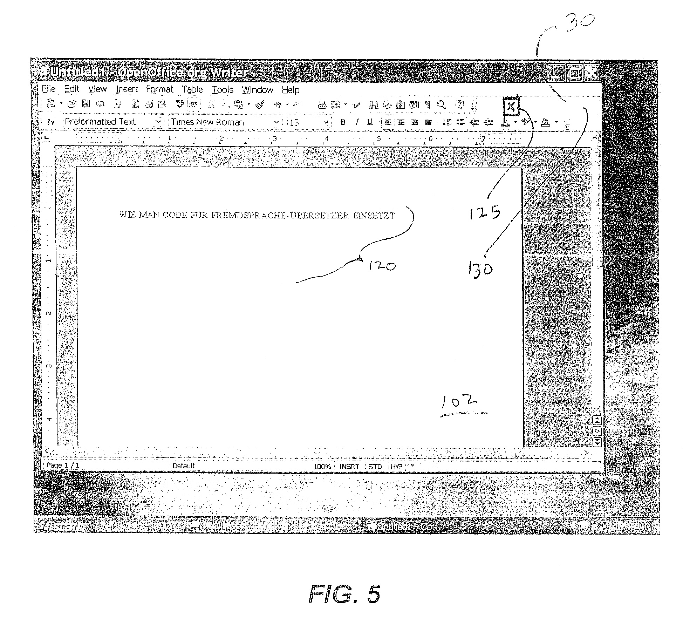

In other embodiments, skilled artisans will appreciate that other methods for executing translations exist. For example, Figure 5 teaches artisans that a dedicated icon button "X" 125 for user selection can be added to a toolbar 130, in a well known manner (e.g., by way of the Tools>Customize option), to give text translations upon "clicking" the icon, provided the button itself is linked to the functionality of the macro. The button can also be duplicated many times over to provide ease of translation, per button, to specific languages, such as German, Spanish, French, etc. In still other embodiments (not shown), the functionality of translation can be exposed via various other user interface mechanisms, such as alternate menu commands, alternate toolbar buttons, hotkey combinations, or the like.

Turning to the code itself, the below macro ("Code Listing") is that actually used in the prototype configuration of the OpenOffice.org (OOo) Writer in Figure 3F to undertake the text translation in Figure 4D (from Babel Fish - although no requirement for this particular service exists, as before). (The inventor has also copied and pasted the same macro code into both the Windows XP and SLED 10-compatible versions of OOo, and it works, unmodified, in both environments. It also works in a standard OOo installation with no modifications to classpaths, security settings, etc.) It is not, however, production quality, per se, but is sufficient to illustrate the invention and certainly proves the concept. At a higher level, the user only has to create a JavaScript macro doing the following (e.g., a more detailed version of Figure 2):
1. Programmatically, using published OOo API methods, obtain in String form the text that the user has currently selected in the open document (e.g., step 44, Figure 2).
2. Craft a set of parameters (including the user text String from the previous step, and a String indicating the desired target language, and such other info as may be required by the remote host, e.g., 20, Figure 1, the remote language translation service) to send to the remote host (e.g., step 46, Figure 2).
3. In code, create a java.net.URL object and open a connection on it (e.g., next to last line of the Code Listing).
4. Use standard Java methods to obtain the output stream and write to it (via POST, for example) (e.g., step 48, Figure 2).
5. Use standard Java methods to obtain the input stream and read from it.
6. Close the connection.
7. Parse the text obtained in Step 5 to strip away any unnecessary language, leaving just the raw translated text (e.g., step 50, Figure 2).
8. Programmatically, using the OOo API, insert the translated text into the document at the current cursor location (e.g., step 52, Figure 2).

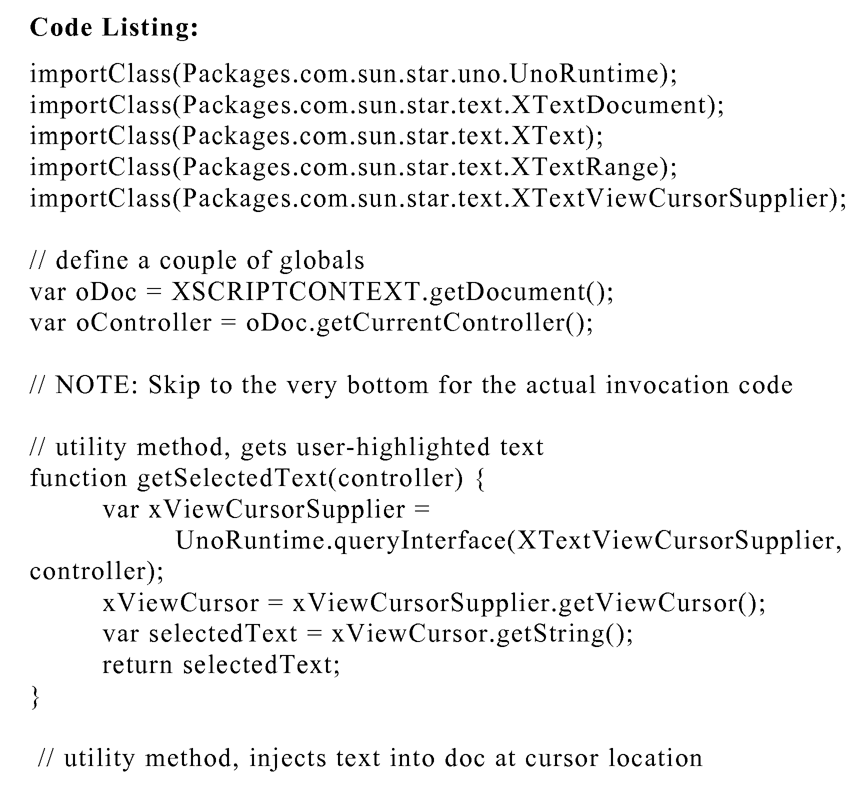

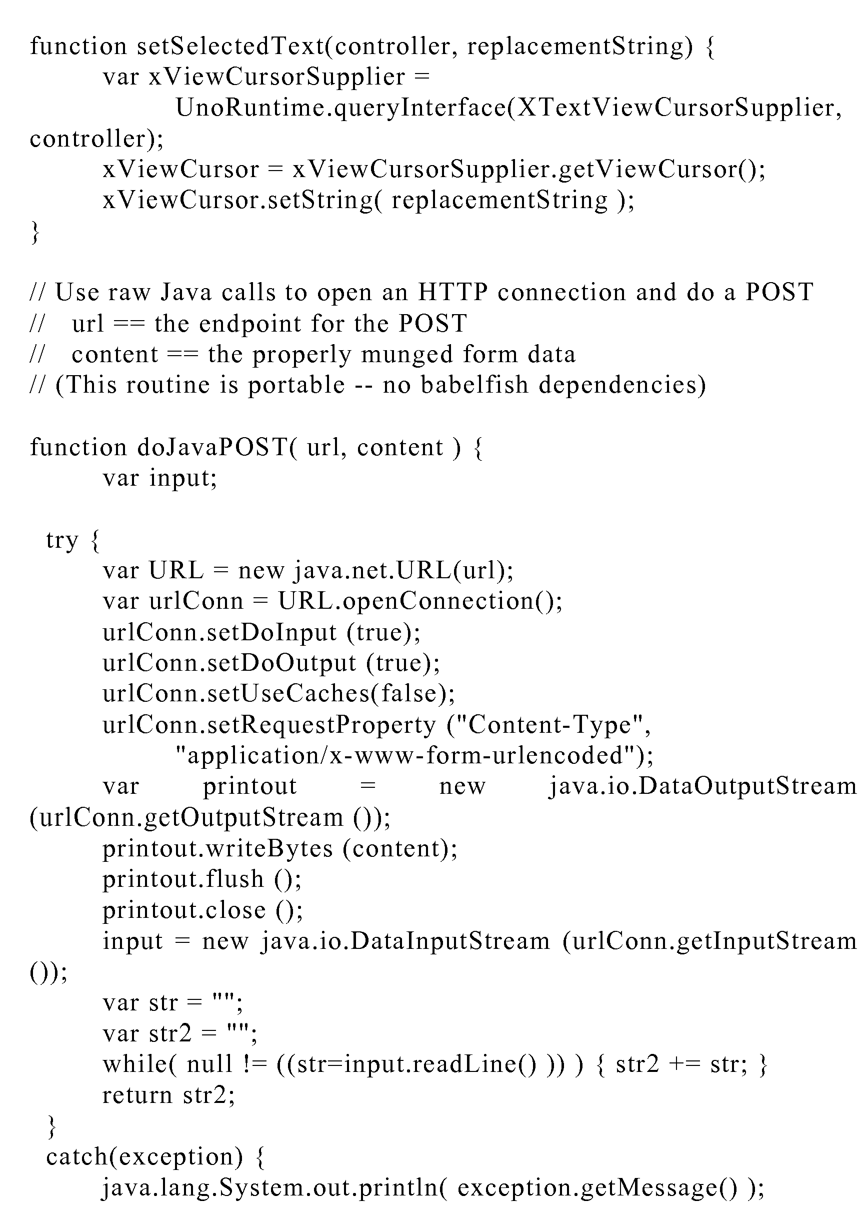

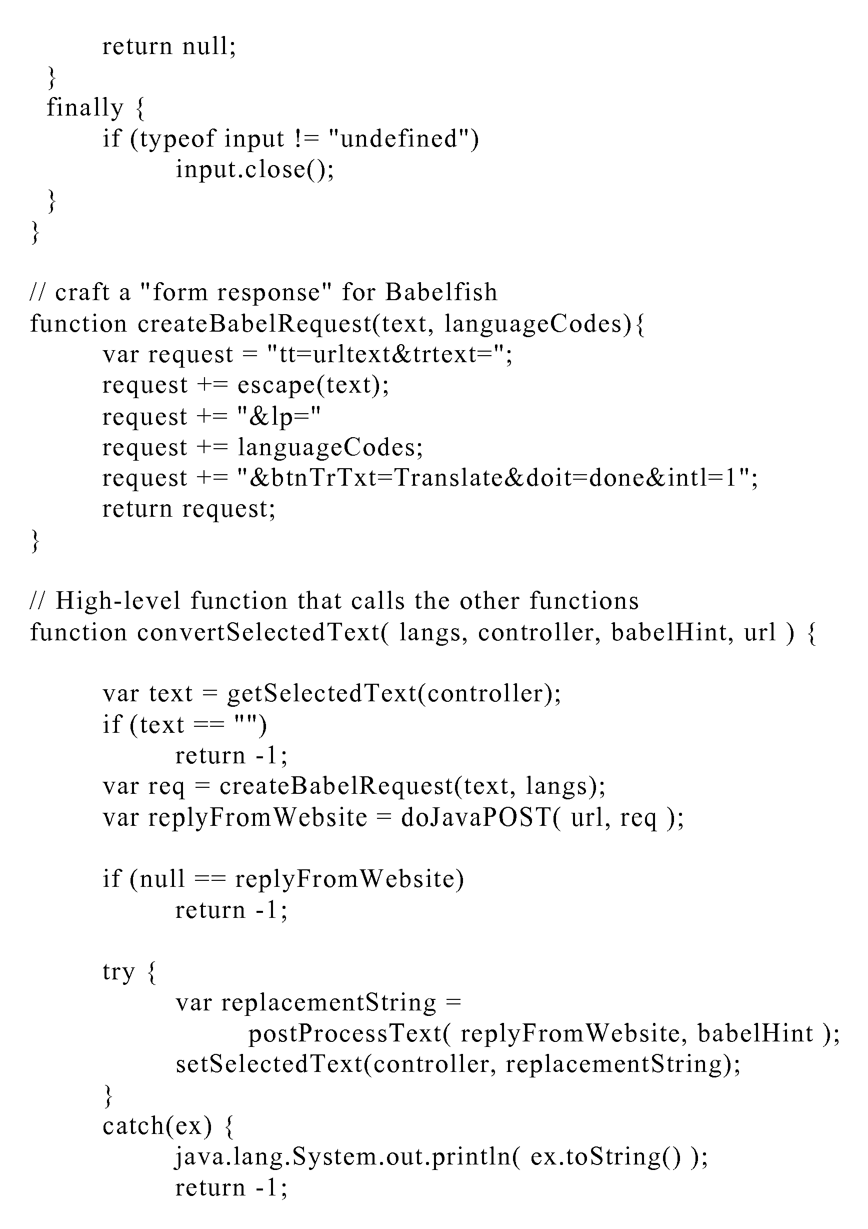

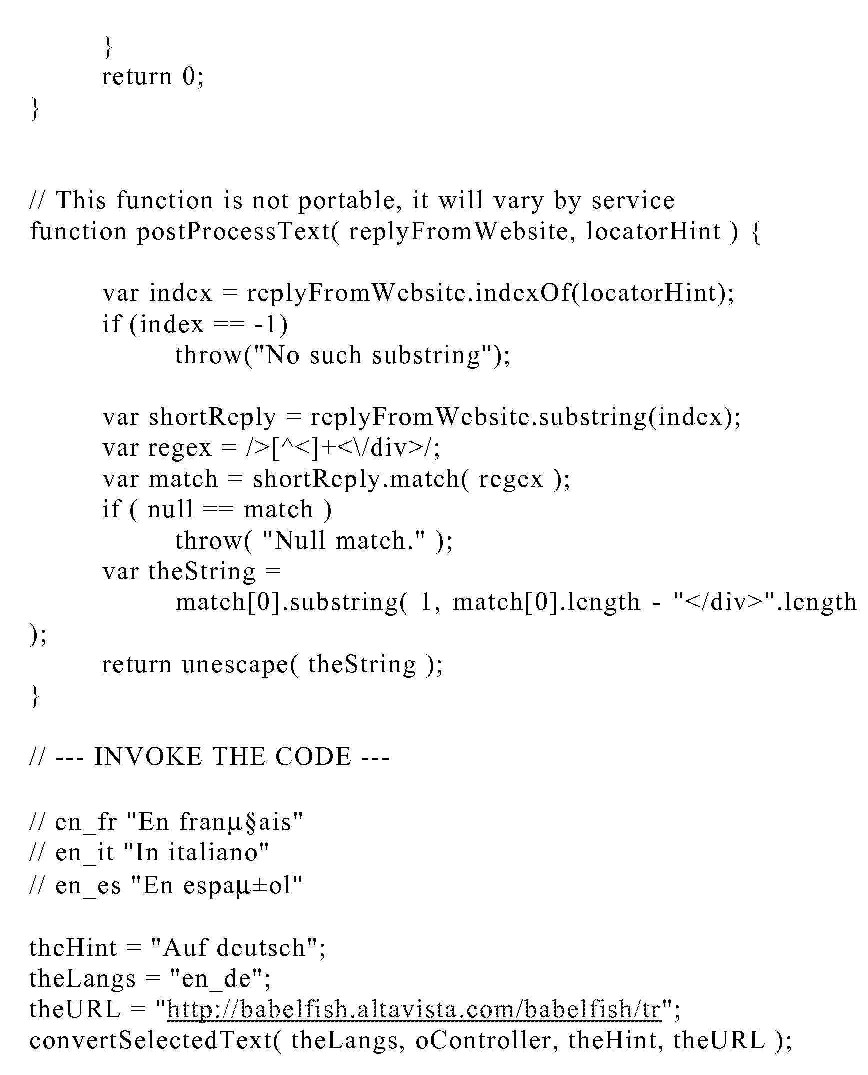

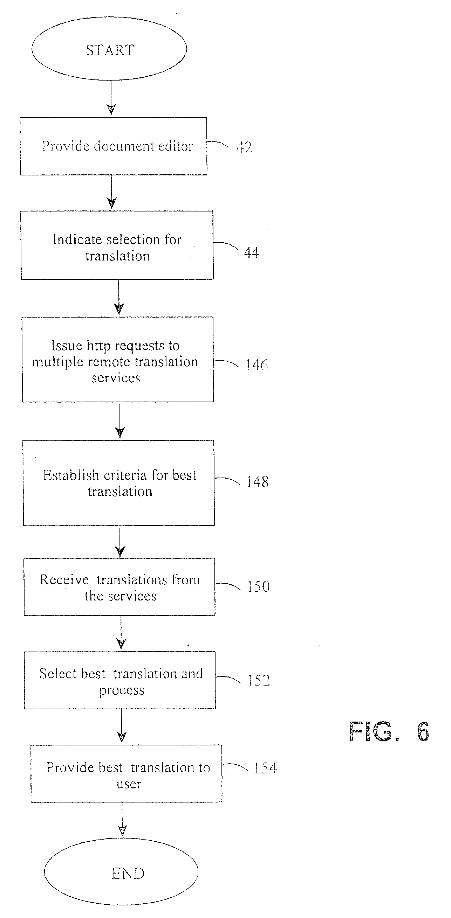

With reference to Figure 6, alternate embodiments of the invention contemplate seeking translation from more than one remote language translation services and providing a "best translation" to the user. At steps 42 and 44, the document editor is provided and a user indicates a selection for translation, as before. At step 146, the document editor issues requests to multiple translation services (e.g., elements 20 and 20' in Figure 1) to seek and receive multiple translations of the text, step 150. According to predetermined criteria for determining a best translation of the many translations (established at step 148), the document editor selects a best translation of the received translations, processes it, and provides it to the user (steps 152 and 154). In this manner, users get an appropriate translation, especially in the context of other text in the document.

For the criteria, numerous objective or subjective standards can be identified to judge a "best translation" of the many translations. For instance, criteria can be based on computing criteria, such as a fastest response time or translations having the fewest extraneous lines of code or text, thereby shortening the time to display the translation. Criteria can also be based on language or grammar. For instance, a best translation may be one that includes punctuation or provides a "better answer." For the latter, consider the scenario where the phonetically-identical Spanish words "porque" and "porqué" mean "because" and "why" in English, respectively. To the extent the document editor presented the translation without an accent mark, a best translation would then require providing the "why" translation in the context of a question or the "because" translation in the context of a conjunction. Alternatively still, an adjudicated best translation might be found in those translations that give users a choice between multiple options, such as giving users a choice between translations of "why" or "because," according to the foregoing example. Naturally, the invention is not limited to any particular criteria and skilled artisans will be able to readily contemplate examples of criteria not listed.

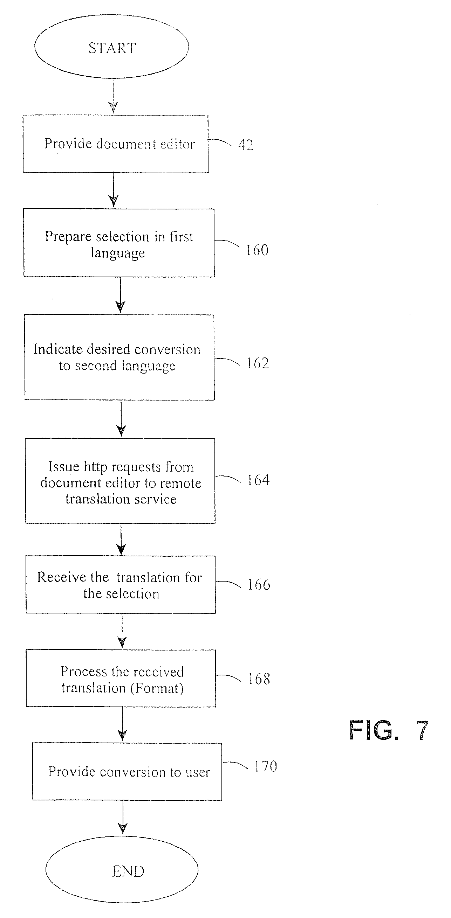

In Figure 7, a variant theme of providing translations is that of converting or actually reformatting documents from a first language (source) to a second language (target). Namely, step 42 requires the providing of the document editor, as before. Step 160, however, has users prepare the selection for conversion in a first language and, at step 162, indicate their desire to convert to the second language. In this regard, menu commands, icon buttons, hotkey combinations, etc. are contemplated, as before. The document editor then issues its requests for translation to remote translation services (step 164), such as by the previous identified executable code in macro form or that available as a download or on a computer-readable media. At step 166, the translations from the services are received whereby they are processed into a language-converted document, step 168, for display to a user, step 170. As contemplated here, however, this includes making a document in a second language of the same format type as the document in the first language. For example, the translation of text from Figure 4A to Figure 4D resulted in a translation of all capital letters to all capital letters, e.g., the same format (all capital letters) to the same format (all capital letters).

In this manner, the format specified by the user in the first document resulted in a second document already having the specified format. In other words, not only did the user get a language translation of the text, they got a word processing document having the same format as the first. They then have no additional tasks to make the second document ready for use. To this end, the functionality of the document editor is uniquely situated.

As another example, consider that users of an open document in a document editor often specify (or as the result of preset defaults) page items, such as font, font size, line spacing, line numbering, page numbering, tab indent amount, etc. Upon conversion of language, however, often times the amount of actual text increases or decreases, such that fewer or greater pages exist between the first and second documents. With the instant invention, if a first document has five pages, and a translation causes the elimination of words such that only four pages exist in a second document, the document editor eliminates the last page from its format. In this manner, users printing the document results in a print length of four pages, not five pages, including a blank fifth page. Alternatively, translations sometimes require the arrangement of text from right-to-left to left-to-right or up-to-down, etc. Appreciating this, a preferred document editor will further include standard defaults for reformatting the actual document in an appropriate manner, such as from left-to-right to right-to-left, etc.. Users then get (with a single indication of a desire to convert their document) a fully formatted new document, complete with translations, and page setup, that does not exist when users simply get language translations in the public domain.

Certain advantages of the invention over the prior art should now be readily apparent. For example, it is heretofore unknown to include language translation within document editors. Now, however, language translation can occur in an invisible manner, thereby avoiding inconveniencing the user to seek translation from external sources. As another example, users that already own and/or use a document editor now have methodology to convert it to a type having language translation services, without requiring a new purchase of the editor. In still another example, users can be provided with language translations that are selected as a best translation of many translations, according to various criteria, without any extra obligation on the user. Still other advantages provide formatting of documents along with language translation so that, upon translation occurring, the user has a ready-to-use document. Of course, these are only a few of the many advantages of the invention and skilled artisans will immediately recognize others.

Finally, one of ordinary skill in the art will recognize that additional embodiments are also possible without departing from the teachings of the present invention. This detailed description, and particularly the specific details of the exemplary embodiments disclosed herein, is given primarily for clarity of understanding, and no unnecessary limitations are to be implied, for modifications will become obvious to those skilled in the art upon reading this disclosure and may be made without departing from the spirit or scope of the invention. Relatively apparent modifications, of course, include combining the various features of one or more figures with the features of one or more of other figures.

## Claims

1. A computer-implemented method for translating language of text in a document editor (30) on a local computing device (15,15'), the method comprising:
configuring the document editor with executable instructions adapted to seek translation from a language translation service (20,20') remote from the computing device upon an indication of a selection of text for translation.

2. The method of claim 1, wherein the configuring the document editor (30) includes providing one or more http requests (46) for the document editor to query the language translation service (20,20').

3. The method of claim 1, further including processing translations (50) received by the language translation service for providing a useable translation form to a user (52).

4. The method of claim 1, wherein the configuring the document editor (30) further includes providing an executable macro.

5. The method of claim 1, comprising:
configuring the document editor with executable instructions to seek translation from multiple language translation services (146) remote from the computing device upon an indication of a selection of text for translation; and
upon receipt of translations (150) for the selection from the multiple language translation services, determining (152) a best translation for presentation to a user (154).

6. The method of claim 5, wherein the configuring the document editor includes providing one or more http requests (146) for the document editor to query each of the multiple language translation services by way of an internet connection.

7. The method of claim 5, further including establishing predetermined criteria (148) for the best translation.

8. A document editor (30) for installation on a computing device (15,15'), comprising:
a first component to display a user-typing area (100) on a monitor (19) of the computing device;
a second component for users to indicate selections of text (106) in the user-typing area for language translation; and
a third component (108) for seeking translation of the indicated selections of text from at least one language translation service remote from the computing device without requiring users to open a browser application.

9. The document editor of claim 8, wherein the third component includes executable code (92) for making a http request of the at least one translation service by way of the internet.

10. The document editor of claim 8, further including a fourth component for displaying a translation of text (120) to the user in the user-typing area returned from the at least one language translation service.

11. The document editor of claim 10, wherein the fourth component functions to seek translation of the indicated selections of text from multiple language translation services remote from the computing device and determines a best translation from the multiple language translation services.

12. The document editor of claim 10, wherein the third component recognizes an executable macro (82) that the fourth component can act on to seek the translation of the indicated selections of text.

13. A computer program which when executing on a computer performs the method of any one of claims 1 to 7.

14. The program of claim 13, when stored on a computer-readable medium.

15. A data structure for insertion in a document editor on a computing device (15,15') to translate a text selection of an open document of the document editor from a first to a second language, comprising:
a first data field containing data representing an http request from the document editor (30) to a language translation service (20,20') remote from the computing device to perform the translating of the text selection to the second language.

16. The data structure of claim 15, further including a second data field containing data functioning to discard response language received from the language translation service (20,20') other than a raw language translation of the text selection.

17. The data structure of claim 15, further including a second data field containing data functioning to perform language translation in the document editor (30) as a macro in the open document of the document editor.

18. The data structure of claim 15, further including a second data field containing data functioning to cause display to a user on a monitor (19) of the computing device (15,15') of the text selection in the second language.
